# EUROPÄISCHE PATENTSCHRIFT

(11) **EP 1 779 003 B1**
(45) Veröffentlichungstag und Bekanntmachung des Hinweises auf die Patenterteilung: **12.03.2008**
(21) Anmeldenummer: 05767860.9
(22) Anmeldetag: 29.07.2005
(51) Int. Cl.: F16H 25/22, B62D 5/04

(54) **KUGELGEWINDETRIEB**
BALL SCREW
VIS D'ENTRAÎNEMENT À BILLES

(30) Priorität: 20.08.2004 DE 102004040362
(43) Veröffentlichungstag der Anmeldung: 02.05.2007
(73) Patentinhaber: Schaeffler KG, 91074 Herzogenaurach (DE)
(72) Erfinder: OSTERLÄNGER, Jürgen, 91448 Emskirchen (DE); ADLER, Dieter, 91074 Herzogenaurach (DE); KRAUS, Manfred, 91074 Herzogenaurach (DE); MAYER, Ralf, 91074 Herzogenaurach (DE)
(86) Internationale Anmeldenummer: PCT/EP2005/008227
(87) Internationale Veröffentlichungsnummer: WO 2006/021286

(56) Entgegenhaltungen:
- EP-A- 0 133 003
- EP-A- 0 418 999
- DE-A1- 1 808 328
- DE-A1- 3 635 212
- DE-A1- 10 016 197
- DE-A1- 10 312 228
- SU-A1- 1 627 773
- US-A- 3 367 201
- US-A- 5 005 436
- US-A- 5 121 647
- US-A- 5 193 409
- US-A- 5 555 770
- PATENT ABSTRACTS OF JAPAN Bd. 018, Nr. 563 (M-1693), 27. Oktober 1994 (1994-10-27) & JP 06 201013 A (KOYO SEIKO CO LTD), 19. Juli 1994 (1994-07-19)
- PATENT ABSTRACTS OF JAPAN Bd. 008, Nr. 258 (M-340), 27. November 1984 (1984-11-27) & JP 59 131059 A (HIROSHI TERAMACHI), 27. Juli 1984 (1984-07-27)
- PATENT ABSTRACTS OF JAPAN Bd. 008, Nr. 203 (M-326), 18. September 1984 (1984-09-18) & JP 59 093557 A (HIROSHI TERAMACHI), 30. Mai 1984 (1984-05-30)

## Beschreibung

### Gebiet der Erfindung

Die vorliegende Erfindung betrifft einen Kugelgewindetrieb. Kugelgewindetriebe zählen zu den Rot-Transgetrieben, bei denen eine rotative Bewegung in eine translatorische Bewegung umgewandelt werden kann. Derartige Kugelgewindetriebe finden zunehmend Anwendung auch im Kfz-Bereich, beispielsweise als Bestandteil einer Lenkunterstützung für eine Zahnstangenlenkung. In diesem Fall ist ein elektromotorischer Antrieb vorgesehen, wobei der vom Motor angetriebene Kugelgewindetrieb eine translatorische Bewegung der Zahnstange unterstützt.

Ein gattungsgemäßer Kugelgewindetrieb ist aus der US-A-5193409 bekannt.

Aus DE 103 12 228 A1 beispielsweise ist ein Kugelgewindetrieb bekannt geworden, bei dem eine Spindelmutter auf einer Kugelrollspindel angeordnet ist. Die Kugelrollspindel bildet zusammen mit der Spindelmutter einen endlosen Kugelkanal für den endlosen Umlauf von Kugeln. Der Kugelkanal umfasst einen schraubenförmig um die Achse der Kugelrollspindel gewundenen Lastabschnitt. Dieser Lastabschnitt ist begrenzt durch an der Spindelmutter und an der Kugelrollspindel ausgebildete Kugelrillen. Ferner umfasst dieser Kugelkanal einen lastfreien Umlenkabschnitt, an dessen beide Enden der Lastabschnitt mit seinen Enden anschließt. Die Kugeln rollen unter Last durch den Lastabschnitt hindurch, treten aus dem Lastkanal heraus und durchlaufen den Umlenkabschnitt, um schließlich wieder in den Lasteinschnitt einzurollen. Auf diese Weise ist ein endloser Umlauf der Kugeln gewährleistet.

Der Umlenkabschnitt weist zwei parallel zueinander angeordnete Schenkel auf, zwischen denen die Kugelrollspindel angeordnet ist. Die beiden Schenkel sind über einem Verbindungsabschnitt miteinander verbunden. Zwischen jedem Schenkel und dem Verbindungsabschnitt ist ein Umlenkwinkel von etwa 90° ausgebildet. Die freien Enden der beiden Schenkel schließen an den Lastabschnitt des endlosen Kugelkanals an. Die beiden Schenkel schließen etwa tangensial an die Kugelrillen der Kugelrollspindel an, sodass die Kugeln möglichst stoßfrei aus dem Lastabschnitt hinein in den Umlenkabschnitt rollen. Auf ihrem Weg durch dem Umlenkabschnitt werden die Kugeln zweimal um jeweils 90° umgelenkt. Die Umlenkungen der Kugel haben lokale Beschleunigungen und Reibungsverluste zur Folge. Die sogenannte Durchschiebekraft der Kugeln durch den endlosen Kugelkanal kann auf diese Weise unerwünscht erhöht sein. Zudem können diese lokal auftretenden Beschleunigungen störende Laufgeräusche hervorrufen.

Aufgabe der vorliegenden Erfindung ist es, einen Kugelgewindetrieb nach den Merkmalen des Oberbegriffs des Anspruchs 1 anzugeben, bei dem die Durchschiebekraft der Kugeln durch den endlosen Kugelkanal reduziert ist.

Erfindungsgemäß wird diese Aufgabe durch die Merkmale des Anspruchs 1 gelöst. Ein an der Achse der Kugelrollspindel gemessener Winkel zwischen den beiden Enden des Umlenkabschnittes kleiner als 180 Grad ist, wobei der Umlenkabschnitt zwei einerseits miteinander verbundene und andererseits mit den Enden versehene Schenkel aufweist, die winklig zueinander angeordnet sind; die Schenkel sind also nicht parallel zueinander angordnet. Der Winkel kann in einem Bereich zwischen 100 Grad und 170 Grad liegen. Zunächst ist ebenso wie bei dem bekannten Stand der Technik sichergestellt, dass die Umlenkabschnitte etwa tangential an die Kugelrillen der Kugelrollspindel anschließen. Während jedoch bei dem bekannten Kugelgewindetrieb der erwähnte Winkel α zwischen den Enden der parallelen Schenkel 180 Grad beträgt, sind bei der erfindungsgemäßen Anordnung mit einem Winkel kleiner als 180 Grad Schenkelanordnungen möglich, bei denen die beiden Schenkel winklig zueinander angeordnet sind. Während bei dem bekannten Kugelgewindetrieb zwei ausgeprägte Umlenkungen von jeweils 90 Grad erfolgen, erfahren erfindungsgemäß die Kugeln im Umlenkabschnitt im optimalen Fall eine gleichbleibende Beschleunigung, dies ist der Fall, wenn die Schenkel und der sie verbindende Verbindungsabschnitt mit konstanter Krümmung versehen sind. Aber selbst wenn im Bereich des Verbindungsabschnittes eine Krümmungsänderung mit der Folge einer lokalen Beschleunigung gegeben ist, erfahren die Kugeln lediglich einmal eine Beschleunigung, während im diskutierten Stand der Technik die Kugeln zweimal beschleunigt werden.

Jedenfalls sind bei dem erfindungsgemäßen Kugelgewindetrieb diese Schenkel nicht parallel zueinander angeordnet und vorzugsweise v-förmig zueinander angeordnet. Die Kugelbahn innerhalb des Umlenkabschnittes ist wenigstens näherungsweise splineförmig ausgebildet. In günstiger Weise sind die Kugeln immer tangential und krümmungsstetig auf einer Kugelbahn geführt, ohne dass Beschleunigungsspitzen auftreten; auch wenn im Verlauf der Kugelbahn Richtungsänderungen erfolgen, sind diese ohne nennenswerte Polygoneffekte in Bezug auf die Bewegung der Kugeln.

Der Winkel kleiner als 180 Grad ermöglicht zudem eine kürzere Kugelbahn für die Kugeln im Umlenkbereich, sodass die Durchschiebekraft weiter reduziert ist.

Bei einer bevorzugten erfindungsgemäßen Weiterbildung weist der Kugelgewindetrieb zwei axial hintereinander angeordnete endlose Kugelkanäle auf, wobei die beiden Umlenkabschnitte diametral einander gegenüberliegen angeordnet sind. Bei dieser Anordnung ist es besonders günstig, dass der Winkel zwischen den beiden Enden des Umlenkabschnittes kleiner 180 Grad beträgt. Denn in diesem Fall ist gewährleistet, dass unter jedem Ortswinkel - aufgetragen auf die Spindelachse - Kugeln Last zwischen der Kugelrollspindel und der Spindelmutter übertragen können. Bei dem eingangs erwähnten bekannten Kugelgewindetrieb mit 180 Grad Umlenkung stellt sich bei diametral einander gegenüberliegend angeordneten Umlenkabschnitten das Problem, dass die Enden beider Umlenkabschnitte in einer gemeinsamen die Spindelachse beinhaltenden Ebene einmünden, also einander überlappen. Das bedeutet, dass die Kugeln der jeweils letzte Windung der beiden endlosen Kugelkanäle in dieser Ebene keine Last übertragen können. Es entsteht ein Tragloch.

Erfindungsgemäß überschneiden die jeweils letzte Windung der beiden Kugelkanäle vielmehr einander mit ihren Lastabschnitten, sodass eine erwünschte Überlappung lastübertragender Abschnitte erzielt wird.

Bei einer besonders bevorzugten erfindungsgemäßen Weiterbildung beträgt der Winkel zwischen den Enden des Umlenkabschnittes zwischen 140 und 150 Grad. Bei der erwähnten Anordnung von zwei Kugelketten mit diametral gegenüberliegenden Umlenkungen ist auf diese Weise sichergestellt, dass immer volle Kugelumläufe tragen und somit kein Tragloch entsteht. Zusätzlich ist gewährleistet, dass durch die in ihrer Länge reduzierte Umlenkung Durchschiebekräfte im Umlenkabschnitt reduziert sind.

Wenn die Umlenkabschnitte einander diametral gegenüberliegend angeordnet sind, sieht die Erfindung vor, dass die Spindelmutter ein hohles Mutterteil aufweist, an dessen Innenumfang die Kugelrillen des jeweiligen Lastabschnittes ausgebildet sind. Am Aussenumfang dieses Mutterteiles sind dann die beiden Umlenkabschnitte bildende Umlenkstücke angeordnet, die umfangseitig auf Lücke zueinander am Aussenumfang des Mutterteiles angeordnet sind. Die Anordnung auf Lücke wird möglich durch den erfindungsgemäß vorgesehenen Winkel von kleiner als 180 Grad. Bei dem bevorzugten Winkelbereich zwischen 140 und 150 Grad kann sich somit in Umfangsrichtung zu beiden Seiten zwischen den beiden Umlenkstücken jeweils eine Lücke einstellen.

Sofern die Spindelmutter in einem Gehäuse gelagert werden soll, oder aber mit einem Antriebsrad verbunden sein soll, bietet es sich nach der Erfindung an, daß das Mutterteil an seinem Außenumfang im Bereich der Lücke als Lagerfläche ausgebildet ist. In diesem Fall können geeignet geformte Gehäuseansätze oder Naben von Antriebsrädern an diesen Lagerflächen abgestützt sein. Sofern ein Antriebsrad drehfest mit der Spindelmutter verbunden sein soll, kann dieses Antriebsrad mit in die Lücken eingreifenden Nabenabschnitten versehen sein, sodass das Antriebsrad einwandfrei an der Spindelmutter gestützt und gelagert ist.

Eine besonders leichtgewichtige und platzsparende Bauweise sieht vor, dass das Antriebsrad einen Antriebskranz aufweist, der mit diesen Nabenabschnitten verbunden ist, wobei umfangseitig zwischen den Nabenabschitten an dem Antriebskranz Hohlräume ausgebildet sind, in denen die Umlenkstücke angeordnet sind. Der Kugelgewindetrieb ist demzufolge platzsparend innerhalb des Antriebsrades untergebracht. Diese integrierte Anordnung hat zudem den Vorteil, dass die beispielsweise von einem Ritzel oder von einem Zahnriemen auf das Antriebsrad übertragenen Kräfte nahezu ohne Hebelarm in den Kugelgewindetrieb eingeleitet werden, sodass unerwünschte Kippmomente weitgehend reduziert sind. Die Umlenkstücke können beispielsweise mit einem Gießharz in diesen Hohlräumen eingegossen werden.

Erfindungsgemäße Kugelgewindetriebe eignen sich besonders für die Verwendung als Lenkunterstützung für eine Zahnstangenlenkung eines Kraftfahrzeuges. In diesem Fall weist die Zahnstange der Zahnstangenlenkung in axialer Verlängerung die Kugelrollspindel auf. Die von ihrem Gewicht her und von ihrem Platzbedarf her optimierte Spindelmutter kann in besonders günstiger Weise eingesetzt werden.

Anstelle von zwei einander diametral gegenüberliegend angeordneten Umlenkabschnitten sind mit der Erfindung auch Kugelgewindetriebe realisierbar, bei denen drei endlose Kugelumläufe vorgesehen sind, wobei dann die Umlenkabschnitte um jeweils 120° zueinander versetzt angeordnet sind. Für den Einsatz als Lenkunterstützung in einer Zahnstangenlenkung kann jedoch die Variante mit lediglich zwei endlosen Kugelumläufen bevorzugt sein, da diese einen reduzierten axialen Bauraumbedarf hat. Nachstehend wird die Erfindung an Hand von einem in insgesamt acht Figuren abgebildeten Ausführungsbeispiel näher erläutert. Es zeigen:
- Figur 1: einen erfindungsgemäßen Kugelgewindetrieb in perspektivischer Darstellung,
- Figur 2: ein Einzelteil des erfindungsgemäßen Kugelgewindetriebes gemäß Figur 1,
- Figur 3: den erfindungsgemäßen Kugelgewindetrieb gemäß Figur 1 in axialer Draufsicht,
- Figur 4: den Kugelgewindetrieb gemäß Figur 1 in perspektivischer Darstellung,
- Figur 5 und 6: Einzelheiten des erfindungsgemäßen Kugelgewindetriebes gemäß Figur 1,
- Figur 7: in schematischer Darstellung den Verlauf der endlosen Kugelbahn bei einem erfindungsgemäßen Kugelgewindetrieb,
- Figur 8: im Längsschnitt eine Lenkunterstützung für eine Zahnstangenlenkung eines Kraftfahrzeuges mit einem erfindungsgemäßen Kugelgewindetrieb gemäß Figur 1.

### Ausführliche Beschreibung der Zeichnung

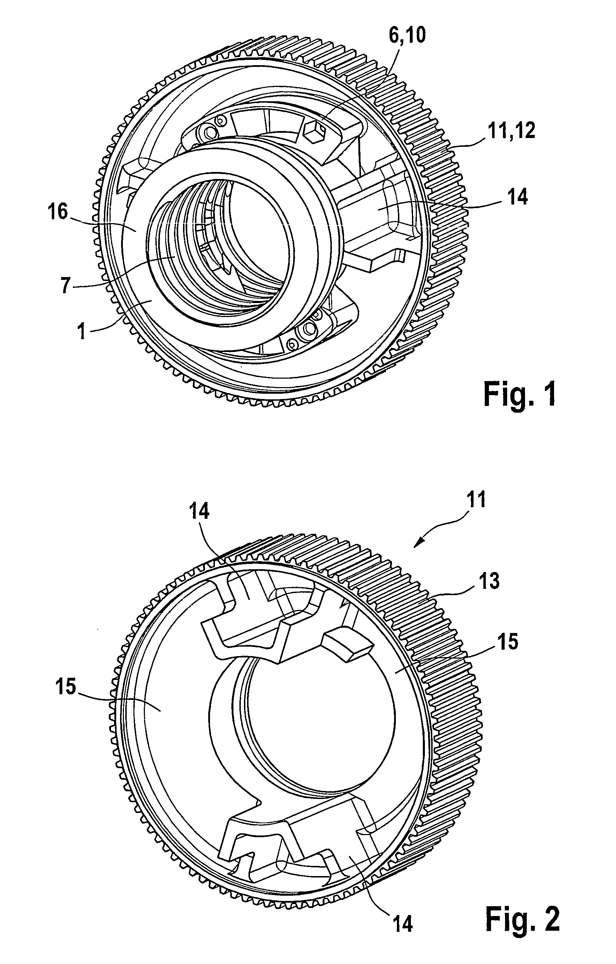

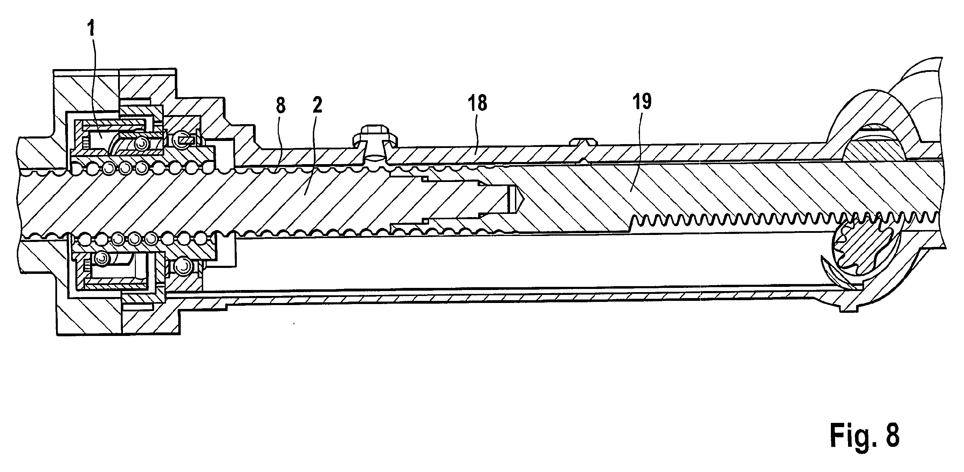

Der in den Figuren 1 bis 4 abgebildete erfindungsgemäße Kugelgewindetrieb umfasst eine Spindelmutter 1, die auf einer Kugelrollspindel 2 drehbar angeordnet ist. Die Kugelrollspindel 2 ist in Figur 8 als Teil einer Lenkunterstützung einer Zahnstangenlenkung für ein Kraftfahrzeug abgebildet. Die Spindelmutter 1 und die Kugelrollspindel 2 begrenzen gemeinsam einen endlosen Kugelkanal 3 für den endlosen Umlauf von Kugeln 4. Der Kugelkanal 3 ist gebildet aus einem Lastabschnitt 5 und einem lastfreien Umlenkabschnitt 6. Der Lastabschnitt 5 ist gebildet aus schraubenförmig um die Spindelachse der Kugelrollspindel 2 gewundenen Kugelrillen 7, 8 der Spindelmutter 1 und der Kugelrollspindel 2, wobei die Kugelrillen 8 der Kugelrollspindel 2 besonders deutlich in Figur 8 zu erkennen sind. Der Lastabschnitt 5 schließt an die beiden Enden des Umlenkabschnittes 6 an, sodass ein endloser Kugelumlauf gewährleistet ist. Im Bereich des Lastabschnittes 5 rollen die Kugeln 4 an den schraubenförmig gewundenen Kugelrillen 7, 8 ab. Der Lastabschnitt 5 erstreckt sich vorliegend um etwa 570 Grad um die Spindelachse der Kugelrollspindel 2.

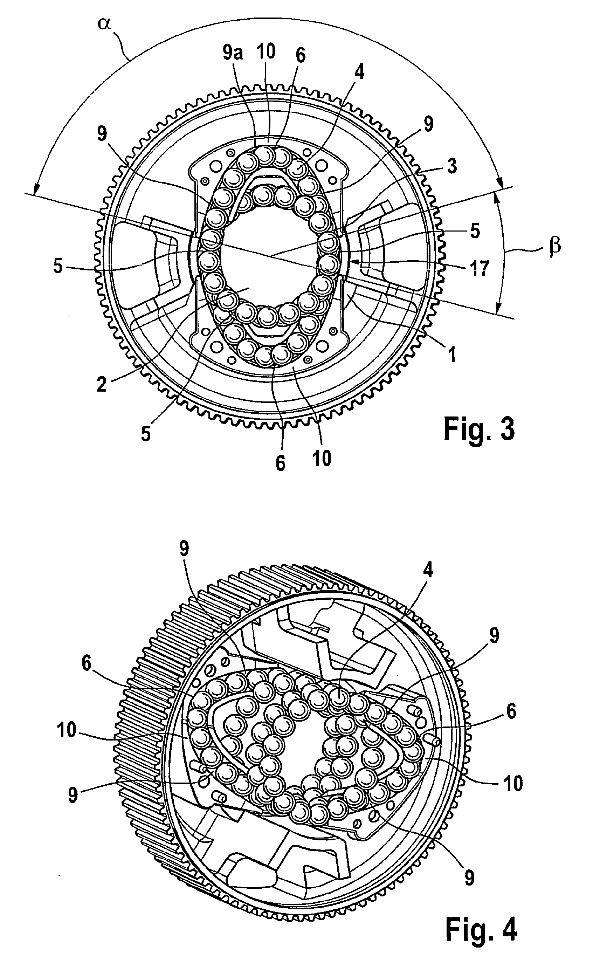

Den Figuren 1 und 2 ist besonders deutlich zu entnehmen, dass der Umlenkabschnitt 6 zwei Schenkel 9 aufweist, die in axialer Richtung gesehen winklig zueinander angeordnet sind. Die Enden des Umlenkabschnittes 6 markieren den Übergang, in dem die Kugeln 4 aus dem lastübertragenden Bereich des Lastabschnitts in den lastfreien Bereich der Umlenkung wechseln. Erfindungsgemäß beträgt der Umlenkbereich weniger als 180 Grad. Dieser in Figur 3 angegebene Winkel α reicht von dem einen Ende bis zu dem anderen Ende des Umlenkabschnittes 6, und wird gemessen an der Spindelachse. Die beiden Schenkel 9 des Umlenkabschnittes 6 sind mittels eines Verbindungsabschnittes 9a miteinander verbunden. Die Bahn der Kugeln 4 innerhalb des Umlenkabschnittes 6 ist so gewählt, dass die Kugeln möglichst ohne Polygoneffekte - also ohne lokale Beschleunigungsspitzen - diesen Bereich durchlaufen. In der Ansicht gemäß Figur 3 stellt sich der Umlenkabschnitt 6 etwa v-förmig dar. Der Winkel α beträgt hier vorliegend ca. 150 Grad.

Insbesondere den Figuren 3 und 4 kann entnommen werden, dass zwei axial hintereinander angeordnete endlose Kugelkanäle 3 vorgesehen sind, wobei die beiden Umlenkabschnitte 6 diametral einander gegenüberliegend angeordnet sind. Bei beiden Umlenkabschnitten beträgt der Winkel α vorliegend ca. 150 Grad. In der die Spindelachse beinhaltenden Ebene des Übergangs von dem lastübertragenden Bereich in den lastfreien Bereich können herkömmliche Kugelgewindetriebe in der Regel eine geringere Radiallast übertragen gegenüber dem erfindungsgemäßen Kugelgewindetrieb bei dem auch noch die letzte Windung eines endlosen Kugelkanals in dieser Ebene Last überträgt. Dieser Effekt ist bei der vorliegenden diametralen Anordnung dadurch ermöglicht, dass der Winkel α kleiner als 180 Grad gewählt ist.

Den Figuren 1, 3 und 4 kann entnommen werden, dass der Umlenkabschnitt 6 an einem Umlenkstück 10 ausgebildet ist. Dieses Umlenkstück 10 ist in der Darstellung gemäß den Figuren 3 und 4 geöffnet abgebildet. Jedes Umlenkstück 10 ist aus zwei Hälften gebildet, wobei eine Trennebene entlang des Kugelkanals 3 im Bereich des Umlenkabschnittes 6 angeordnet ist. In den Figuren 3 und 4 ist lediglich die eine Hälfte eines jeden Umlenkstückes abgebildet. In diesen Abbildungen ist somit deutlich die Lage der Kugeln 4 innerhalb des Kugelkanals 3 zu erkennen.

Insbesondere der Figur 3 kann entnommen werden, dass der Winkel α von dem einen Ende des Umlenkstückes 10 zu dessen anderen Ende reicht. Die beiden diametral einander gegenüberliegend angordneten Umlenkstücke 10 sind in beiden Umfangsrichtungen auf Lücke zueinander angeordnet. In der Figur 3 ist dies durch den Scheitelwinkel β zum Ausdruck gebracht. Der Scheitelwinkel β beträgt vorliegend ca. 30 Grad. Dieser Winkel β stellt zugleich einen Überschneidungsbereich dar, in dem die jeweils letzte Windung beider Kugelkanäle 3 mit ihren lastübertragenden Lastabschnitten 5 einander überlappen. Ein sogenanntes Tragloch liegt demzufolge in diesem Bereich nicht vor.

Figur 1 zeigt deutlich, dass auf der Spindelmutter 1 ein Antriebsrad 11 angeordnet ist. Dieses Antriebsrad 11 ist vorliegend als Zahnriemenscheibe 12 ausgebildet. Das Antriebsrad 11 ist drehfest auf der Spindelmutter 1 angeordnet. Figur 2 zeigt deutlich die Ausbildung des Antriebsrades 11. Das Antriebsrad 11 umfasst einen Antriebskranz 13, der vorliegend von einem hier nicht abgebildeten Riemen umschlungen ist. Dieser Antriebskranz 13 ist fest mit zwei diametral einander gegeüberliegend angeordneten Nabenabschnitten14 verbunden. Umfangseitig sind zwischen diesen Nabenabschnitten 15 Hohlräume 15 an dem Antriebskranz 13 ausgebildet.

Figur 1 zeigt, dass die Spindelmutter 1 ein hohles Mutterteil 16 aufweist, an dessen Innenumfang die Kugelrillen 7 ausgebildet sind. Am Aussenumfang dieses Mutterteiles 16 sind die beiden Umlenkstücke 10 in beschriebener Weise in Umfangsrichtung auf Lücke zueinander angeordnet. Im Bereich der Lücken ist das Mutterteil 16 mit Lagerflächen 17 versehen, wie insbesondere der Figur 3 zu entnehmen ist. Die Nabenabschnitte 14 des Antriebsrades 13 sind so dimensioniert, dass sie einwandfrei in diese Lücken hinein passen und zur Anlage an die Lagerflächen 17 gelangen. Auf diese Weise ist der Antriebskranz 13 einwandfrei gegenüber der Spindelmutter 1 abgestützt und gelagert. Weiter oben wurde bereits ausgeführt, dass der erfindungsgemäß vorgeschlagene Umlenkwinkel α von ca. 140 bis 150 Grad - vorliegend 150 Grad - die Vorteile bietet, dass zum einen die Länge des Umlenkabschnittes reduziert ist, und zum anderen die sogenannten Traglöcher reduziert sind. Dieser Winkelbereich bietet jedoch den weiteren Vorteil, dass der verbleibende Scheitelwinkel β hier ca. 30 Grad hinreichend groß ist, dass über die vollständige axiale Erstreckung der Spindelmutter eine Abstützung des Antriebsrades 13 erfolgen kann.

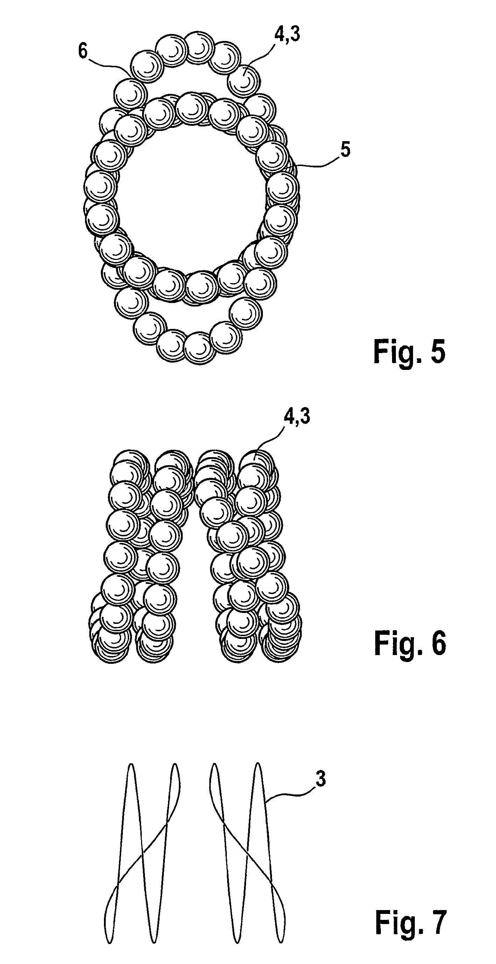

In den Figuren 5, 6, 7 sind die endlosen Kugelreihen mit der Bahn des endlosen Kugelkanals abgebildet. Figur 7 zeigt den Verlauf von den Bahnen von zwei axial hintereinander und umfangsseitig diametral einander gegenüberliegend angeordneten Kugelumläufen gemäß dieser Erfindung. Der axiale Abstand zwischen den beiden endlosen Kugelkanälen - also der Totgang - kann variieren. Je geringer der Abstand ausgebildet ist, desto geringer ist der axiale Bauraumbedarf; mit wachsendem Abstand können zunehmend größere Kippmomente übertragen werden.

Figur 8 zeigt im Längsschnitt eine Lenkunterstützung für die Zahnstangenlenkung eines Kraftfahrzeuges. In einem Gehäuse 18 ist die Zahnstange 19 angeordnet, die in ihrer axialen Verlängerung als Kugelrollspindel 2 ausgebildet ist. In dem Gehäuse 18 ist zudem die Spindelmutter 1 untergebracht.

### Bezugszahlenliste

- 1.: Spindelmutter
- 2.: Kugelrollspindel
- 3.: Kugelkanal
- 4.: Kugel
- 5.: Lastabschnitt
- 6.: Umlenkabschitt
- 7.: Kugelrille
- 8.: Kugelrille
- 9.: Schenkel
- 9a.: Verbindungsabschnitt
- 10.: Umlenkstück
- 11.: Antriebsrad
- 12.: Zahnriemenscheibe
- 13.: Antriebskranz
- 14.: Nabenabschnitt
- 15.: Hohlraum
- 16.: Mutterteil
- 17.: Lagerfläche
- 18.: Gehäuse
- 19.: Zahnstange

## Patentansprüche

1. Kugelgewindetrieb, mit einer auf einer Kugelrollspindel (2) angeordneten Spindelmutter (1), die zusammen mit der Kugelrollspindel (2) einen endlosen Kugelkanal (3) für den endlosen Umlauf von Kugeln (4) begrenzt, wobei der Kugelkanal (3) einen von schraubenförmig um die Spindelachse der Kugelrollspindel (3) gewundene Kugelrillen (7, 8) der Spindelmutter (1) und der Kugelrollspindel (2) gebildeten Lastabschnitt (5) und einen lastfreien Umlenkabschnitt (6) aufweist, an dessen beide Enden der Lastabschnitt (5) anschließt, wobei ein an der Spindelachse der Kugelrollspindel (2) gemessener Winkel α zwischen den beiden Enden des Umlenkabschnittes (6) kleiner als 180 Grad ist, wobei der Umlenkabschnitt (6) zwei einerseits miteinander verbundene und andererseits mit den Enden versehene Schenkel (9) aufweist, die winklig zueinander angeordnet sind und wobei die Spindelmutter (1) ein hohles Mutterteil (16) mit den am Innenumfang des Mutterteiles (16) ausgebildeten Kugelrillen (7) des jeweiligen Lastabschnittes (5) und zwei am Außenumfang des Mutterteiles (16) angeordnete, die beiden Umlenkabschnitte (6) bildende Umlenkstücke (10) aufweist, **dadurch gekennzeichnet, dass** die beiden Umlenkstücke (10) umfangsseitig auf Lücke am Außenumfang des Mutterteiles (16) angeordnet und in beiden Umfangsrichtungen auf Lücke zueinander angeordnet sind, wobei die Lücken diametral einander gegenüberliegend angeordnet sind, wobei das Mutterteil (16) an seinem Außenumfang im Bereich der Lücke als Lagerfläche (17) ausgebildet ist.

2. Kugelgewindetrieb nach Anspruch 1, bei dem die Schenkel (9) mittels eines Verbindungsabschnittes (9a) miteinander verbunden sind, wobei die Schenkel (9) in Richtung längs zur Spindelachse gesehen v-förmig zueinander angeordnet sind.

3. Kugelgewindetrieb nach Anspruch 1, bei dem der Winkel α zwischen den Enden des Umlenkabschnittes (6) zwischen 140 und 150 Grad beträgt.

4. Kugelgewindetrieb nach Anspruch 1, bei dem zwei axial hintereinander angeordnete endlose Kugelkanäle (3) vorgesehen sind, wobei die beiden Umlenkabschnitte (6) diametral einander gegenüberliegend angeordnet sind.

5. Kugelgewindetrieb nach Anspruch 1, mit einem drehfest auf der Spindelmutter (1) angeordneten Antriebsrad (11) zum Antreiben der Spindelmutter (1), wobei das Antriebsrad (11) mit in die Lücken eingreifenden Nabenabschnitten (14) an den Lagerflächen (17) gestützt ist.

6. Kugelgewindetrieb nach Anspruch 5, bei dem das Antriebsrad (11) einen Antriebskranz (13) aufweist, der mit den Nabenabschnitten (14)verbunden ist, wobei umfangsseitig zwischen den Nabenabschnitten (14) Hohlräume (15) gebildet sind, in denen die Umlenkstücke (10) angeordnet sind.

7. Lenkunterstützung für eine Zahnstangenlenkung eines Kraftfahrzeuges, mit einem Kugelgewindetrieb nach einem oder mehreren der vorangegangenen Ansprüche, wobei eine Zahnstange (19) der Zahnstangenlenkung in axialer Verlängerung mit der Kugelrollspindel (2) versehen ist.

## Claims

1. Ball screw mechanism, comprising a ball screw nut (1), which is disposed on a ball screw (2) and which, together with the ball screw (2), delimits a continuous ball channel (3) for the continuous circulation of balls (4), wherein the ball channel (3) has a load portion (5), formed by ball grooves (7, 8) of the ball screw nut (1) and of the ball screw (2), which ball grooves are wound helically about the screw axis of the ball screw (2), and a load-free deflection portion (6), both ends of which are adjoined by the load portion (5), wherein an angle α between the two ends of the deflection portion (6), which is measured at the screw axis of the ball screw (2), is less than 180 degrees, wherein the deflection portion (6) has two arms (9), which, on the one hand, are connected to each other and, on the other hand, are provided with the ends, and are disposed at an angle to each other, and wherein the ball screw nut (1) has a hollow nut part (16) having the ball grooves (7) of the respective load portion (5), which are configured on the inner periphery of the nut part (16), and two deflection elements (10), disposed on the outer periphery of the nut part (16) and forming the two deflection portions (6), **characterized in that** the two deflection elements (10), on the peripheral side, are arranged staggered on the outer periphery of the nut part (16) and are mutually staggered in both peripheral directions, the gaps of the stagger being disposed diametrically opposite one another, and the nut part (16) being configured on its outer periphery, in the region of the gap, as a bearing surface (17).

2. Ball screw mechanism according to Claim 1, in which the arms (9) are connected to each other by means of a connecting portion (9a), the arms (9) being disposed in a V-shape to each other, viewed in the direction longitudinally to the screw axis.

3. Ball screw mechanism according to Claim 1, in which the angle α between the ends of the deflection portion (6) measures between 140 and 150 degrees.

4. Ball screw mechanism according to Claim 1, in which two continuous ball channels (3) disposed axially one behind the other are provided, the two deflection portions (6) being disposed diametrically opposite each other.

5. Ball screw mechanism according to Claim 1, comprising a drive wheel (11) for driving the ball screw nut (1), which drive wheel (11) is disposed in a rotationally fixed manner on the ball screw nut (1) and is supported against the bearing surfaces (17) with hub portions (14) which engage in the gaps.

6. Ball screw mechanism according to Claim 5, in which the drive wheel (11) has a drive ring (13), which is connected to the hub portions (14), cavities (15) being formed on the peripheral side between the hub portions (14), in which cavities the deflection elements (10) are disposed.

7. Steering booster for a rack-and-pinion steering gear of a motor vehicle, comprising a ball screw mechanism according to one or more of the preceding claims, a toothed rack (19) of the rack-and-pinion steering gear being provided in axial extension with the ball screw (2).

## Revendications

1. Vis d'entraînement à billes, avec un écrou de broche (1) disposé sur une broche filetée à billes (2), qui délimite avec la broche filetée à billes (2) un canal à billes sans fin (3) pour la circulation infinie de billes (4), dans laquelle le canal à billes (3) présente une partie de charge (5) formée par des rainures à billes (7, 8) de l'écrou de broche (1) et de la broche filetée à billes (2) enroulées sous forme hélicoïdale autour de l'axe de broche de la broche filetée à billes (2) et une partie de déviation sans charge (6), dont les deux extrémités se raccordent à la partie de charge (5), dans laquelle un angle α entre les deux extrémités de la partie de déviation (6), mesuré sur l'axe de broche de la broche filetée à billes (2), est inférieur à 180°, dans laquelle la partie de déviation (6) comprend deux branches (9) d'une part reliées l'une à l'autre et d'autre part pourvues des extrémités et qui sont inclinées l'une par rapport à l'autre, et dans laquelle l'écrou de broche (1) comporte une partie d'écrou creuse (16) avec les rainures à billes (7) de la partie de charge respective (5) formées sur la périphérie intérieure de la partie d'écrou (16) et deux pièces de déviation (10) disposées sur la périphérie extérieure de la partie d'écrou (16) et formant les deux parties de déviation (6), **caractérisée en ce que** les deux pièces de déviation (10) sont disposées côté périphérie à intervalles sur la périphérie extérieure de la partie d'écrou (16) et à intervalles l'une par rapport à l'autre dans les deux directions périphériques, dans laquelle les intervalles sont diamétralement opposés l'un à l'autre et dans laquelle la partie d'écrou (16) forme une surface de palier (17) sur sa périphérie extérieure dans la région des intervalles.

2. vis d'entraînement à billes selon la revendication 1, dans laquelle les branches (9) sont reliées l'une à l'autre au moyen d'une partie de liaison (9a), dans laquelle les branches (9) sont disposées en forme de V l' une par rapport à l'autre en regardant dans la direction de l'axe de broche.

3. vis d'entraînement à billes selon la revendication 1, dans laquelle l'angle α entre les extrémités de la partie de déviation (6) vaut entre 140 et 150 degrés.

4. vis d'entraînement à billes selon la revendication 1, dans laquelle il est prévu deux canaux à billes sans fin (3) disposés axialement l'un derrière l'autre, dans laquelle les deux parties de déviation (6) sont diamétralement opposées l'une à l'autre.

5. vis d'entraînement selon la revendication 1, avec une roue d'entraînement (11) solidaire en rotation de l'écrou de broche (1) pour entraîner l'écrou de broche (1), dans laquelle la roue d'entraînement (11) est appuyée sur les surfaces de palier (17) avec des parties de moyeu (14) s'engageant dans les intervalles.

6. vis d'entraînement à billes selon la revendication 5, dans laquelle la roue d'entraînement (11) comprend une couronne d'entraînement (13), qui est solidaire des parties de moyeu (14), dans laquelle des espaces creux (15) sont formés côté périphérie entre les parties de moyeu (14), dans lesquels les pièces de déviation (10) sont disposées.

7. Aide à la direction pour une direction à crémaillère d'un véhicule automobile, avec une vis d'entraînement à billes selon une ou plusieurs des revendications précédentes, dans laquelle la crémaillère (19) de la direction à crémaillère est pourvue de la broche filetée à billes (2) dans son prolongement axial.
